# EUROPEAN PATENT APPLICATION

(11) **EP 4 711 655 A1**
(43) Date of publication of application: **18.03.2026**
(21) Application number: 25201150.7
(22) Date of filing: 09.09.2025
(51) Int. Cl.: F16K 11/074

(54) **MULTI-PORT VALVE**

(30) Priority: 12.09.2024 CN 202411280352
(71) Applicant: Johnson Electric International AG, 3280 Murten (CH)
(72) Inventor: CHEN, Fangqi, Shen Zhen (CN); CHEN, Anbang, Shen Zhen (CN); QU, Tao, Shen Zhen (CN); SUN, Ning, Shen Zhen (CN); TANG, Shanyong, Shen Zhen (CN)
(74) Representative: Doherty, William

(57) **Abstract**

A multi-port valve includes a valve housing (20), a valve core rotatably mounted to the valve housing (20) and a sealing gasket (40/40a/40b/40c) disposed between the valve housing (20) and the valve core. The valve housing (20) defines a plurality of valve ports (22). The valve core defines a plurality of flow channels (32). The sealing gasket (40/40a/40b/40c) is provided with a plurality of openings (42/42a/42b/42c) arranged at intervals in a circumferential direction and a plurality of first ribs (44/44a/44b/44c) respectively arranged between adjacent two of the openings (42/42a/42b/42c). The flow channels (32) extend through an end of the valve core facing the sealing gasket to define a plurality of channel ports (34/34a/34b/34c); the channel ports (34/34a/34b/34c) are arranged at intervals in a circumferential direction with a plurality of second ribs (35/35a/35b/35c) respectively arranged between adjacent two of the channel ports (34/34a/34b/34c). each of the first ribs (44/44a/44b/44c) or second ribs (35/35a/35b/35c) forms two wing portions (36/36c/46a/46b) at circumferential sides thereof to make a portion of the first or second rib has a larger circumferential width than other portion thereof.

## Description

### FIELD OF THE INVENTION

The invention relates to the technical field of valves, in particular to a multi-port valve.

### BACKGROUND

A valve is a controlling component in the fluid delivery system, which can be used to control the on-off, flow direction, etc. of the fluid. For example, in the thermal management system of new energy vehicles, valves are usually required to control flow of coolant.

A common thermal management system of vehicle includes several cooling circuits (e.g., battery cooling circuits and electric drive system cooling circuits), and several heat exchangers (e.g., radiators and chillers). The multiple cooling circuits are connected through one or more multi-port valves to satisfy heat exchange requirements of the multiple circuits.

A present multi-port valve always includes a sealing gasket (40/40a/40b/40c) sandwiched between a valve housing and a valve core rotatably mounted to the valve housing to prevent fluid leakage. However, the sealing gasket (40/40a/40b/40c) will cause large rotational torque between the valve core and the valve housing. Furthermore, the rotational resistance varies throughout the rotation process, which would bring large torque fluctuations and be detrimental the smoothness of rotation of the valve core.

### SUMMARY OF THE INVENTION

The present invention aims to provide a multi-port valve that can solve the above-mentioned problems or at least alleviate the above-mentioned problems to a certain extent.

The present invention provides a multi-port valve including a valve housing, a valve core rotatably mounted to the valve housing and a sealing gasket (40/40a/40b/40c) disposed between the valve housing and the valve core. The valve housing defines a plurality of valve ports. The valve core defines a plurality of flow channels. The sealing gasket (40/40a/40b/40c) is provided with a plurality of openings arranged at intervals in a circumferential direction and a plurality of first ribs respectively arranged between adjacent two of the openings. The flow channels extend through an end of the valve core facing the sealing gasket to define a plurality of channel ports; the channel ports are arranged at intervals in a circumferential direction with a plurality of second ribs respectively arranged between adjacent two of the channel ports. each of the first ribs or second ribs forms two wing portions at circumferential sides thereof to make a portion of the first or second rib has a larger circumferential width than other portion thereof.

Preferably, the wing portions are arc-shaped strips that extend circumferentially from the first for second ribs.

Preferably, all the wing portions formed as arc-shaped strips are connected one by one to cooperatively form a circular ring.

Preferably, the wing portions are connected to the first or second ribs approximately at radial midpoints thereof.

Preferably, the wing portions protrude from circumferential sides of the first or second ribs, and adjacent to radial inner ends thereof.

Preferably, a circumferential width of each of the wing portions gradually decreases radially outward.

Preferably, thickness of the wing portions is slightly smaller than that of the first or second ribs, on which the wing portions depend.

Preferably, the valve core comprises a main body, and a first end plates fixed to an axial end of the main body facing the sealing gasket (40/40a/40b/40c), the flow channels are defined in the main body the channel ports and the second ribs are arranged at the first end plate.

### BRIEF DESCRIPTION OF THE DRAWINGS

Figure 1 is a perspective view of a multi-port valve according to a first embodiment of the present invention.
Figure 2 is a cross-sectional view of the multi-port valve shown in figure 1.
Figures 3 and 4 are exploded views of the multi-port valve shown in figure 1 from different aspects.
Figure 5 is a further exploded view of the valve core of the valve shown in figure 4.
Figure 6 is a perspective view of the first end plate of the valve core.
Figure 7 is a schematic perspective view showing the sealing gasket (40/40a/40b/40c) tightly mated with the first end plate.
Figure 8 is a top plan view of figure 7.
Figures 9 and 10 are similar to figure 7, but showing the valve core rotating at different angles relative to that showing in figure 7.
Figure 11 is a schematic perspective view showing a sealing gasket (40/40a/40b/40c) tightly mated with a first end plate of a valve core of a second embodiment.
Figure 12 is the exploded view of the sealing gasket (40/40a/40b/40c) and the first end plate of figure 11.
Figure 13 is a schematic perspective view showing a sealing gasket (40/40a/40b/40c) tightly mated with a first end plate of a valve core of a third embodiment.
Figure 14 is the exploded view of the sealing gasket (40/40a/40b/40c) and the first end plate of figure 13.
Figure 15 is a schematic perspective view showing a sealing gasket (40/40a/40b/40c) tightly mated with a first end plate of a valve core of a fourth embodiment.
Figure 16 is the exploded view of the sealing gasket (40/40a/40b/40c) and the first end plate of figure 15.

### DETAILED DESCRIPTION OF THE PREFERRED EMBODIMENTS

The present invention will be further described below based on the drawings and the embodiments.

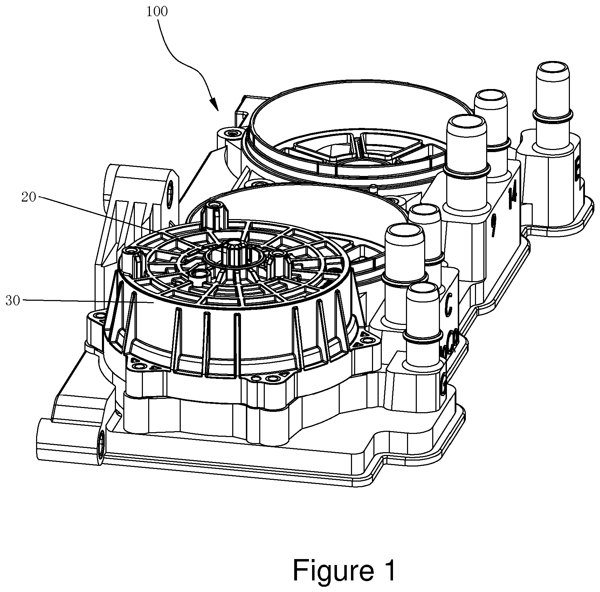

Referring to figures 1-4, a multi-port valve according to a first embodiment includes a valve housing 20, a valve core 30 rotatably installed in the valve housing 20, and a sealing gasket (40/40a/40b/40c) 40 disposed between the valve housing 20 and the valve core 30. The valve housing 20 defines multiple valve ports 22. The valve core 30 is provided with a plurality of flow channels 32 configured to interconnect the corresponding valve ports 22 of the valve housing 20. By rotating the valve core 30 relative to the valve housing 20, the flow channels 32 can be enabled to in communication with different valve ports 22.

In one embodiment, the valve 100 can be applied to a thermal management system of an electric vehicle with different cooling circuits. The valve ports 22 are correspondingly connected with the cooling circuits. A flow direction and/or flow rate of the coolant in various cooling circuits of the thermal management can be adjusted by rotating the valve core 30 relative to the valve housing 20. It should be understood that the multi-port valve of the present application is not limited to an application in electric vehicle thermal management systems.

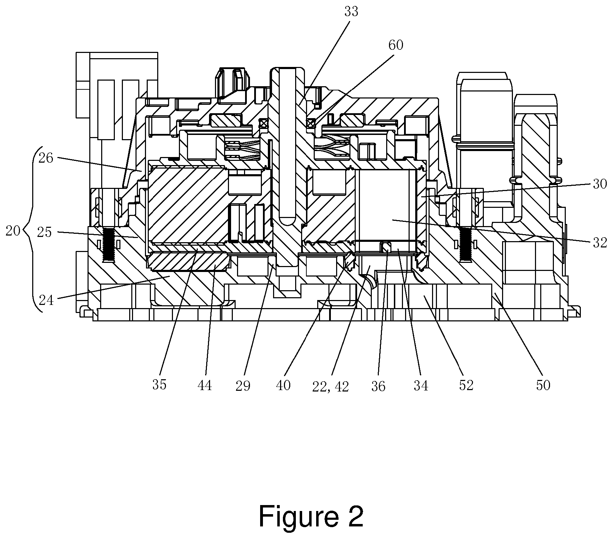

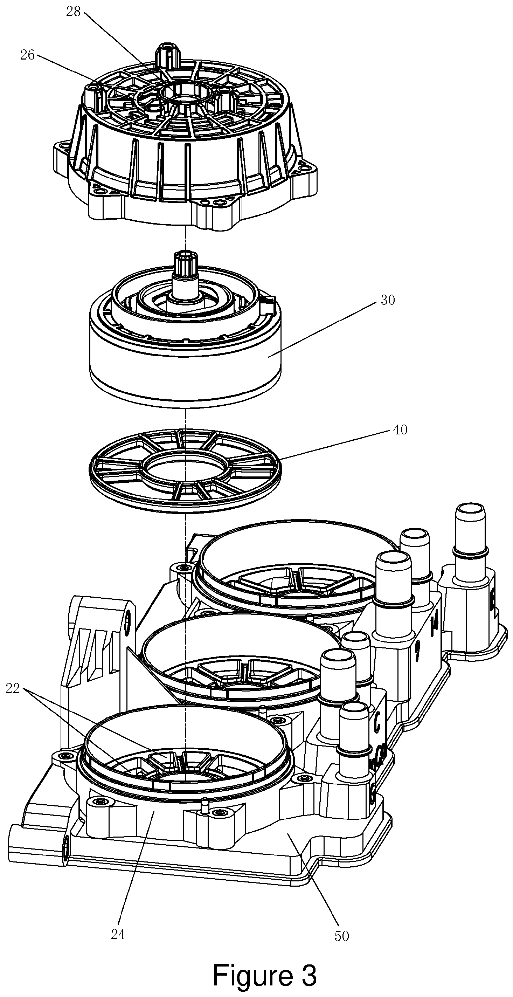

Referring to Figures 2 and 3, the valve housing 20 is hollow cylindrical as a whole, and includes an annular side plate 25, and a base plate 24 and a house cover 26 repetitively disposed at opposite axial ends of the side plate 25. In the first embodiment, the base plate 24 and the side plate 25 are integrally formed as one piece. The house cover 26 is separately formed and fixed onto the side plate 25 by screwing or other fixing manners. The base plate 24, side plate 25, and house cover 26 enclose an inner space to accommodate the valve core 30. The valve ports 22 are arranged at the base plate 24 of the valve housing 20, and extends through the base plate 24 in the axial direction and communicating with the inner space of the valve housing 20. The valve ports 22 are distributed along a circumference of the base plate 24 at intervals.

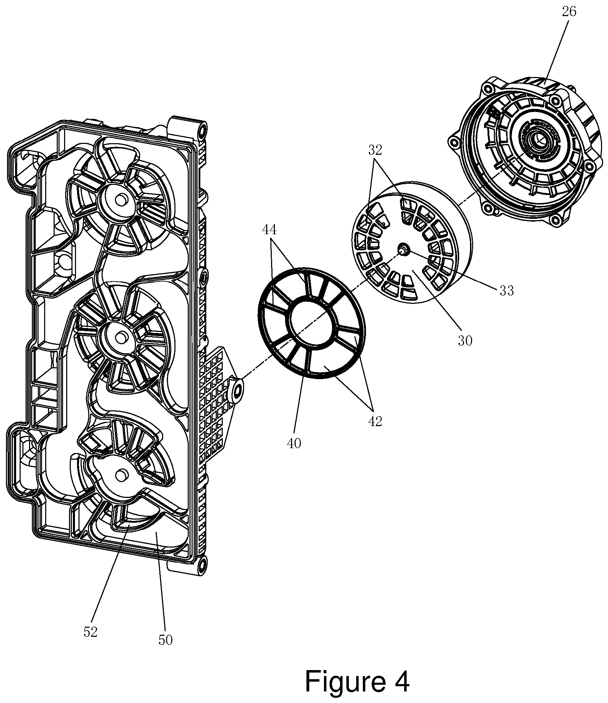

Referring to Figures 3 and 4, the sealing gasket (40/40a/40b/40c) 40 is fixedly mounted to the valve housing 20 and stacked onto an inner side of its base plate 24, with a circular shape as a whole. The sealing gasket (40/40a/40b/40c) 40 can be made of elastic materials such as rubber, which can prevent direct friction between the valve core 30 and the base plate 24 during rotation, and also prevent fluid leakage from between the valve core 30 and the base plate 24. The sealing gasket (40/40a/40b/40c) 40 is provided with a plurality of openings corresponding to the valve ports 22. The openings 42 are arranged at intervals in the circumferential direction. The sealing gasket (40/40a/40b/40c) 40 are further provided with a plurality of first ribs 44, which extends radially and respectively arranged between adjacent openings 42.

The valve core 30 is cylindrical as a whole and is rotatably mounted in the inner space of the valve housing 20. a shaft 33 extends axially from an end of the valve core 30. In assembly, an end (i.e. a top end) of the shaft 33 extends outward through the house cover 26 of the valve housing 20 for connection with a power mechanism, such as a driving motor (not shown in the figure). Consequently, the valve core 30 can be driven to rotate relative to the valve housing 20. Correspondingly, a shaft hole 28 is formed in a centre of the house cover 26 for the shaft 33 extending therethrough. Preferably, a sealing ring 60 is provided in the shaft hole 28 and surround the shaft 33 to prevent fluid leakage from the shaft hole 28.

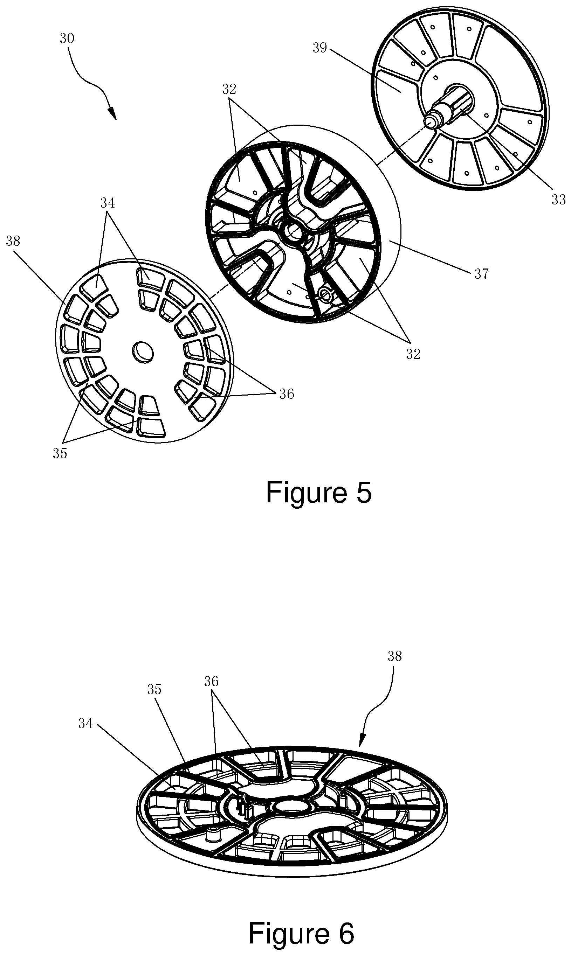

Referring to figure 5 and figure 6. the flow channels 32 extends through an end of the valve core 30 facing the valve housing 20 to define a plurality of channel ports 34 therein. The channel ports 34 of the one of the flow channels are capable of being aligned and communicated with corresponding valve ports 22 of the valve housing 20, thereby interconnecting the corresponding valve ports 22. The channel ports 34 may be arranged along a circumference of the valve core 30. The valve core 30 is provided with a plurality of second ribs 35, which extends radially and respectively arranged between adjacent channel ports 34. In one embodiment, the valve core 30 are further provided with a plurality of wing portions 36 extending circumferentially from circumferential sides of the second ribs 35.

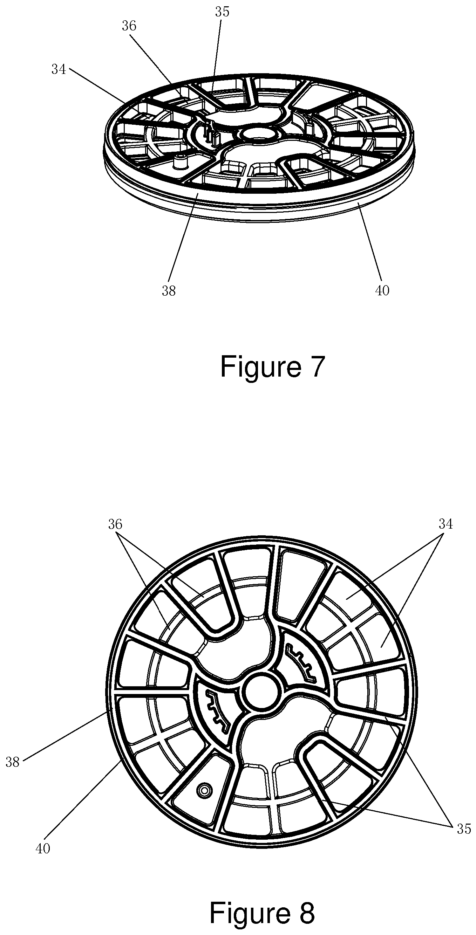

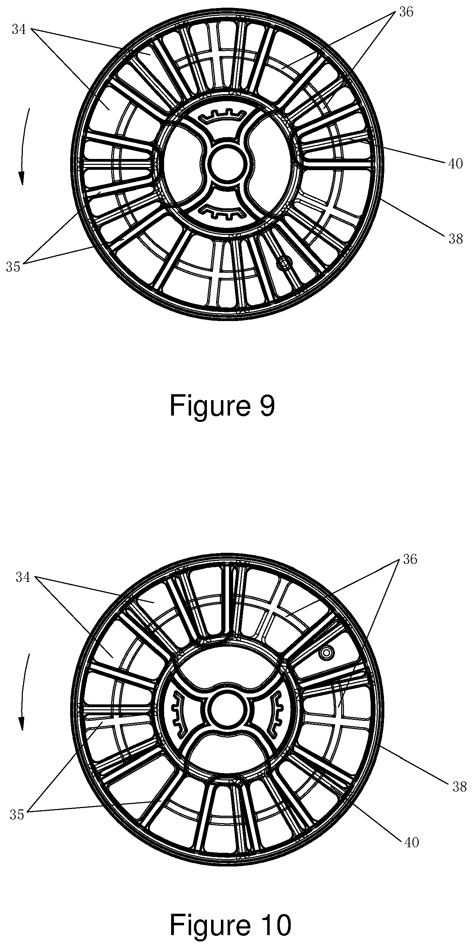

In assembly, the sealing gasket (40/40a/40b/40c) 40 is sandwiched between the base plate 24 of the valve housing 20 and the valve core 30. Referring to figures 8 to 10, when the valve core 30 is switched from one working state to another relative to the valve housing 20, one or more of the second ribs 35 of the valve core 30 will pass over the corresponding first ribs 44 of the sealing gasket (40/40a/40b/40c) 40 in the circumferential direction and exert significant rotational resistance by squeezing and rubbing against each other. Due to the wing portions 36 formed on one of the second ribs 35 will contact with and exert a certain compression onto the first ribs 44 of the sealing gasket (40/40a/40b/40c) 40 in ahead of said one second ribs 35, thereby reducing the rotational resistance when the corresponding one second rib 35 passes over the corresponding first ribs 44, which can reduce the torque variation during the rotation and make the operation of the multi-port valve smooth.

Referring to Figure 5, in the first embodiment, the valve core 30 includes a main body 37, and a first end plates 38 and a second end plates 39 respectively fixed to opposite axial ends of the main body 37. The flow channels 32 are defined in the main body 37. The first end plate 38 is located at an end of the main body 37 facing the base plate 24 of the valve housing 20. The second end plate 39 is located at an end of the main body 37 opposite to the base plate 24. The channel ports 34 and the second ribs 35 are arranged at the first end plate 38.

In the first embodiment, the wing portions 36 are arc-shaped strips that extend circumferentially from the second ribs 35. Preferably, the arc-shaped strips extending form adjacent wing portions 36 are connected with each other.

More preferably, in the first embodiment, all the wing portions 36 formed as arc-shaped strips are connected one by one to cooperatively form a circular ring, which is concentric with the first end plate 38. During the rotation of the valve core 20, the first ribs 44 of the sealing gasket (40/40a/40b/40c) 40 are kept pressing against by the circular ring.

More preferably, in the first embodiment, the wing portions 36 are connected to the second ribs 35 approximately at radial midpoints of the corresponding second ribs 35. Therefore, the circular ring formed by the wing portions 36 approximately press against radial midpoints of the first ribs 44 of the sealing gasket (40/40a/40b/40c) 40.

In one embodiment, the first end plate 38 and/or the second end plate 39 of the valve core 30 may be separately formed and fixed to the main body 37 by welding or other fixing manners. Alternatively, the first end plate 38 and/or the second end plate 39 may be integrally formed.

In one embodiment, the shaft 33 are integrally formed with the second end plate 39 of the valve core 30. A bottom end of shaft 33 is rotatably engaged in the valve housing 20. Specifically, a hob 29 is provided at a centre of the base plate 24 of the valve housing 20 to receive the shaft 33. Alternatively, the shaft 33 may also be separately formed with the second end plate 39.

In one embodiment, the valve 100 are mounted to a manifold 50 to jointly form a thermal management module. Preferably, the manifold 50 can interface with a plurality of valves 10. Preferably, the base plate 24 of the valve hosing 20 is integrally formed with the manifold plate 50. The manifold plate 50 is provided with a plurality of ports 52 correspondingly communicating with the valve ports 22 of the valve housing 20.

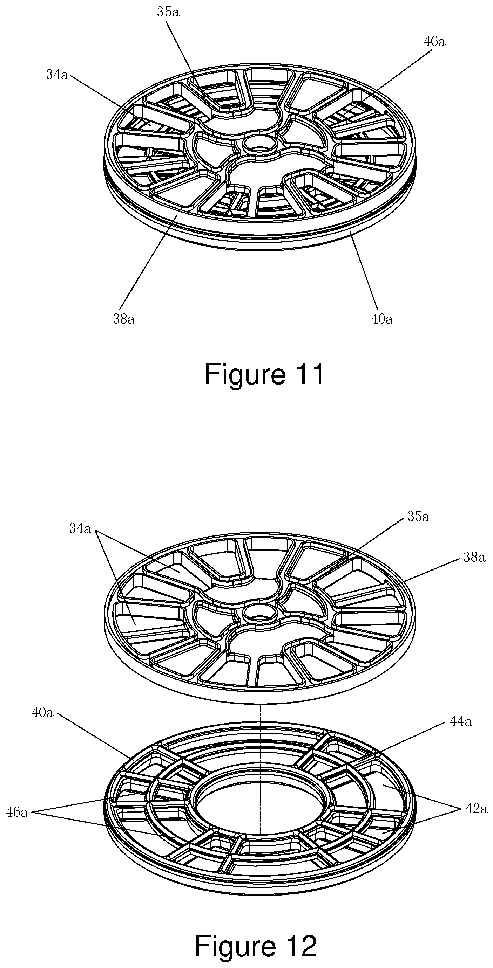

Referring to figures 11-12, the multi-port valve of a second embodiment differs from the first embodiment mainly in the wing portions. For the sake of simplification, the accompanying drawings of the second embodiment only show the structure related to the wing portion, such as the sealing gasket (40/40a/40b/40c) 40a and the first end plate 38a of the valve core.

In the second embodiment, wing portions 46a is provided on the sealing gasket (40/40a/40b/40c) 40a rather than on the valve core. Specifically, the wing portions protrude from circumferential sides of first ribs 44a of the sealing gasket (40/40a/40b/40c) 40a. Specifically, the wing portions 46a are arc-shaped strips that extend circumferentially from the first ribs 44a, Preferably, the arc-shaped strips extending form adjacent wing portions 36 are connected with each other. More preferably, in the second embodiment, all the wing portions 46a formed as arc-shaped strips are connected one by one to cooperatively form a circular ring, which is concentric with the sealing gasket (40/40a/40b/40c) 40a.

In the second embodiment, thickness, i.e. radial size of the wing portions 46a is slightly smaller than that of the first ribs 44a of the sealing gasket (40/40a/40b/40c) 40a. During the rotation of the valve core, each of the second ribs 35a of the valve core are kept pressing against the circular ring of the sealing gasket (40/40a/40b/40c) 40a. In other words, the wing portions 46a on the first ribs 44a of the sealing gasket (40/40a/40b/40c) 40a will be pressed by the second ribs 35a of the valve core in ahead of the corresponding first ribs 44a, thereby reducing the rotational resistance when the second ribs 35a pass over the corresponding first ribs 44, which can reduce the torque variation during the rotation and make the operation of the multi-port valve smooth.

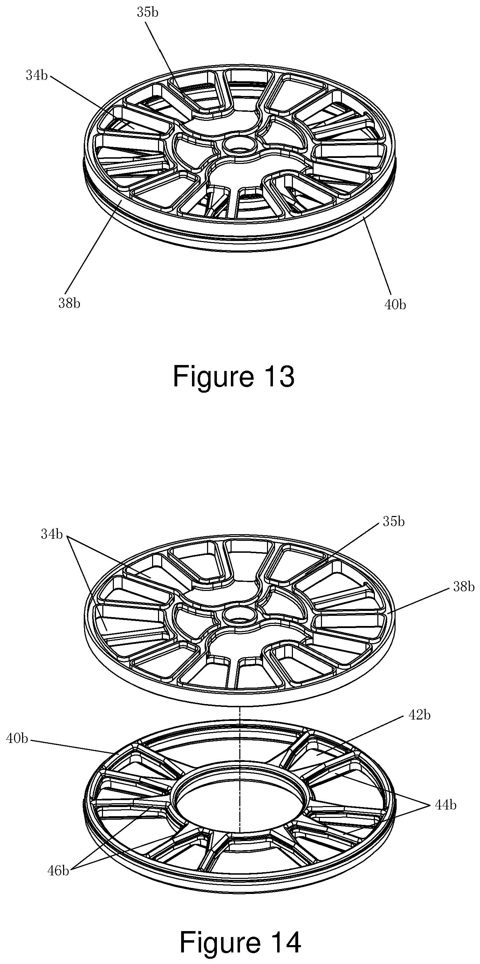

Referring to figures 13-14, the multi-port valve of a third embodiment differs from other embodiments mainly in the wing portions. In the second embodiment, wing portions 46b protrude from circumferential sides of the first ribs 44b and adjacent to radial inner ends of the corresponding first ribs 44b. In other words, the radial inner end of the first rib 44b has a larger circumferential width than the radial outer end thereof. Therefore, during the rotation of the valve core, the wing portions 46b on the first ribs 44b of the sealing gasket (40/40a/40b/40c) 40b will be pressed by the second ribs 35b of the valve core in ahead of the corresponding first ribs 44b, thereby reducing the rotational resistance when the second ribs 35b pass over the corresponding first ribs 44b, which can reduce the torque variation during the rotation and make the operation of the multi-port valve smooth.

Preferably, in the third embodiment, a circumferential width of each of the wing portions 46b gradually decreases radially outward. So that the first 44b and the two wing portions 46b thereof looks like a "Y".

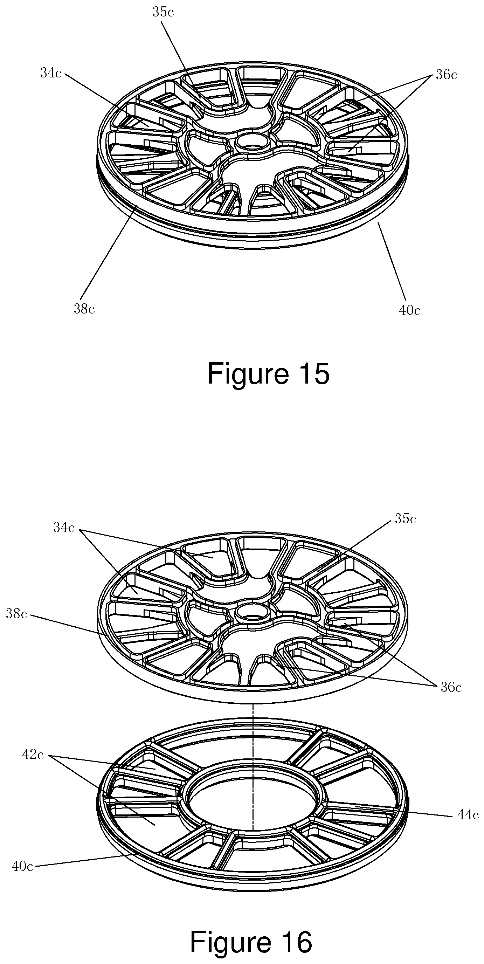

Referring to figures 15-16, the multi-port valve of a fourth embodiment differs from other embodiments mainly in the wing portions. In the fourth embodiment, wing portion 36c protrude from circumferential sides of the second ribs 35c of first end plate 38c of the valve core and adjacent to radial inner ends of the corresponding second ribs 35c. In other words, the radial inner end of the second ribs 35 has a larger circumferential width than the radial outer end thereof.

In the fourth embodiment, thickness, i.e. radial size of the wing portions 36c is slightly smaller than that of the second ribs 35c of the valve core. Therefore, during the rotation of the valve core, the wing portions 36c the second ribs 35c will contact with and exert a certain compression onto the first ribs 44c of the sealing gasket (40/40a/40b/40c) 40c in ahead of the corresponding second ribs 35c, thereby reducing the rotational resistance when the second ribs 35c pass over the corresponding first ribs 44c, which can reduce the torque variation during the rotation and make the operation of the multi-port valve smooth.

Preferably, in the fourth embodiment, a circumferential width of each of the wing portions 36c gradually decreases radially outward.

Although certain inventive embodiments of the present disclosure have been specifically described, the present disclosure is not to be construed as being limited thereto. Various changes or modifications may be made to the present disclosure without departing from the scope and spirit of the present disclosure.

## Claims

1. A multi-port valve (100) comprising:
a valve housing (20) defining a plurality of valve ports (22);
a valve core (30) rotatably mounted to the valve housing (20) and defining a plurality of flow channels (32), and
a sealing gasket (40/40a/40b/40c) disposed between the valve housing (20) and the valve core (30);
wherein the sealing gasket (40/40a/40b/40c) is provided with a plurality of openings (42/42a/42b/42c) arranged at intervals in a circumferential direction and a plurality of first ribs (44/44a/44b/44c) respectively arranged between adjacent two of the openings (42/42a/42b/42c) of the sealing gasket (40/40a/40b/40c); the openings (42/42a/42b/42c) of the sealing gasket (40/40a/40b/40c) are correspondingly aligned with the valve ports (22); the flow channels (32) extend through an end of the valve core (30) facing the sealing gasket (40/40a/40b/40c) to define a plurality of channel ports (34/34a/34b/34c); the channel ports (34/34a/34b/34c) are arranged at intervals in a circumferential direction with a plurality of second ribs (35/35a/35b/35c) respectively arranged between adjacent two of the channel ports (34/34a/34b/34c); each of the first ribs (44/44a/44b/44c) or second ribs (35/35a/35b/35c) forms two wing portions (36/36c/46a/46b) at circumferential sides thereof to make a portion of the first or second rib has a larger circumferential width than other portion thereof.

2. The multi-port valve according to claim 1, wherein the wing portions (36/46a) are arc-shaped strips that extend circumferentially from the first for second ribs (35/44a).

3. The multi-port valve according to claim 2, wherein all the wing portions (36/46a) formed as arc-shaped strips are connected one by one to cooperatively form a circular ring.

4. The multi-port valve according to claim 2, wherein the wing portions (36/46a) are connected to the first or second ribs (35/44a) approximately at radial midpoints thereof.

5. The multi-port valve according to claim 1, wherein the wing portions (36c/46b) protrude from circumferential sides of the first or second ribs (35c/44b), and adjacent to radial inner ends thereof.

6. The multi-port valve according to claim 5, wherein a circumferential width of each of the wing portions (36c/46b) gradually decreases radially outward.

7. The multi-port valve according to claim 1, wherein thickness of the wing portions (36/36c/46a/46b) is slightly smaller than that of the first or second ribs, on which the wing portions (36/36c/46a/46b) depend.

8. The multi-port valve according to any one of claims 1-7, wherein the valve core comprises a main body (37), and a first end plates (38/38a/38b/38c) fixed to an axial end of the main body (37) facing the sealing gasket (40/40a/40b/40c), the flow channels (32) are defined in the main body (37) the channel ports (34/34a/34b/34c) and the second ribs (35/35a/35b/35c) are arranged at the first end plate.
